# EUROPÄISCHE PATENTSCHRIFT

(11) **EP 3 643 688 B1**
(45) Veröffentlichungstag und Bekanntmachung des Hinweises auf die Patenterteilung: **14.12.2022**
(21) Anmeldenummer: 18202857.1
(22) Anmeldetag: 26.10.2018
(51) Int. Cl.: C03B 19/14, C03B 23/045, C03B 32/00

(54) **VERFAHREN ZUR HOMOGENISIERUNG VON GLAS**
METHOD FOR HOMOGENISING GLASS
PROCÉDÉ D'HOMOGÉNÉISATION DE VERRE

(43) Veröffentlichungstag der Anmeldung: 29.04.2020
(73) Patentinhaber: Heraeus Quarzglas GmbH & Co. KG, 63450 Hanau (DE)
(72) Erfinder: THOMAS, Stephan, 63538 Großkrotzenburg (DE); VYDRA, Jan, 63456 Hanau (DE); TROMMER, Martin, 06749 Bitterfeld (DE); HÜNERMANN, Michael, 63755 Alzenau (DE); LANGNER, Andreas, 63579 Freigericht (DE); LEHMANN, Walter, 04155 Leipzig (DE); HENGSTER, Stefan, 64850 Schaafheim (DE); BECKER, Klaus, 63457 Hanau (DE)
(74) Vertreter: Staudt, Armin Walter

(56) Entgegenhaltungen:
- EP-B1- 0 673 888
- US-A- 2 904 713

## Beschreibung

### Technischer Hintergrund

Die Erfindung betrifft ein Verfahren zur Homogenisierung von Glas, umfassend die Verfahrensschritte:
(a) Bereitstellen eines zylinderförmigen Rohlings aus dem Glas mit einer Zylindermantelfläche, die sich entlang einer Rohling-Längsachse über eine Rohling-Länge zwischen einem ersten stirnseitigen Ende und einem zweiten stirnseitigen Ende erstreckt,
(b) Ausbilden einer Scherzone in dem Rohling, indem ein Längenabschnitt des Rohlings erweicht und einer thermisch-mechanischen Durchmischungsbehandlung unterzogen wird, und
(c) Verschieben der Scherzone entlang der Rohling-Längsachse.

In Hochpräzisionssysteme eingebaute optische Bauteile aus Glas unterliegen hohen Anforderungen hinsichtlich ihrer Transparenz und Homogenität. Häufig zeigt Glas allerdings heterogene Strukturen, wie Schichten und sogenannte "Schlieren", die auf Glasbereiche mit unterschiedlicher Zusammensetzung oder Unterschiede im Brechungsindex zurückzuführen sind.

Dies ist besonders problematisch bei hochkieselsäurehaltigem Glas mit einem hohen Anteil an SiO₂ von beispielsweise mehr als 80 Gew.-%, und insbesondere bei Quarzglas mit einem SiO₂-Anteil von 87 Gew.-% oder mehr. Dabei kann die Viskosität auch bei Temperaturen nahe der Sublimation immer noch so hoch sein, dass es nicht in einem Schmelztiegel durch Rühren oder Läutern homogenisiert werden kann.

Zur Beseitigung von Schlieren und Schichten in Quarzglas sind tiegelfreie Schmelzverfahren bekannt, bei denen ein zylinderförmiger Ausgangskörper in Spindelstöcke einer Glasdrehbank eingespannt und zonenweise erweicht wird, wobei gleichzeitig die Spindelstöcke mit unterschiedlichen Geschwindigkeiten oder gegenläufig um eine Rotationsachse rotieren. Durch die unterschiedliche Rotation des Ausgangskörpers beiderseits der Erweichungszone kommt es dort zu Torsion (Verdrillen) und damit zu mechanischer Durchmischung im Glasvolumen. Der Bereich der thermisch-mechanischen Durchmischung wird hier auch als "Scherzone" bezeichnet. Die Scherzone wird entlang des Ausgangskörpers verschoben und dieser dabei über seine Länge umgeformt und durchmischt. Heterogene Strukturen (Schlieren und Schichten) werden so verringert oder beseitigt. Ergebnis dieser thermisch-mechanischen Durchmischungsbehandlung ist ein Rohling aus mindestens teilweise homogenisiertem Glas. Diese Art der thermisch-mechanischen Durchmischungsbehandlung durch werkzeugfreies Umformen wird im Folgenden auch als "Homogenisierungsprozess", "Zonenschmelzverfahren" oder "Drillen", und der nach dem Drillen vorliegende mindestens teilweise homogenisierte zylinderförmige Rohling wird als "Drillstab" bezeichnet.

### Stand der Technik

Ein derartiges Zonenschmelzverfahren ist aus der US 3,485,613 A bekannt. Der in eine Glasdrehbank eingespannte massive oder mit einer Pulvermischung gefüllte Glaszylinder wird lokal erhitzt und zonenweise tordiert. Als Heizquelle werden ein- oder mehrflammige Brenner oder elektrische Heizquellen eingesetzt. Die Abmessung der Scherzone in Richtung der Rotationsachse (=Breite der Scherzone) hängt von der Viskosität ab. Bei Viskositäten von weniger als etwa 10¹³ Poise (dPa s) wird sie auf einen Wert im Bereich zwischen dem 0,1 bis 3-fachen des Stabdurchmessers eingestellt, und bei Viskositäten von weniger als etwa 10⁵ Poise (dPa·s) auf einen Wert im Bereich zwischen dem 0,1 bis 1-fachen des Stabdurchmessers. Sie kann durch seitlich einwirkende Kühlmittel eingeengt werden.

Der zu homogenisierende Rohling ist horizontal angeordnet und die Halterungen für die Rohling-Enden liegen sich horizontal gegenüber. Die aufgrund dieses Konzeptes erzeugte Scherzone ist theoretisch eben, kreisförmig und rotationssymmetrisch. Der Materialtransport in der Scherzone verläuft im Wesentlichen tangential, aber nicht in radialer Richtung. Das bedeutet, dass radiale Glasfehler im Rohling nicht oder kaum beseitigt werden können. Insbesondere werden vorhandene Blasen nicht zur Zylindermantelfläche transportiert, sondern sie verbleiben im Materialvolumen. Gleichermaßen werden radiale Konzentrationsgradienten eines Dotierstoffs nicht beseitigt. Das Problem wird dadurch verstärkt, dass infolge der wärmeisolierenden Wirkung von Quarzglas der Wärmetransport von außen nach innen langsam ist. Dadurch ist es im Zentrum der Scherzone kälter als an der Oberfläche, was zu einer höheren Viskosität und einer geringeren Durchmischung beiträgt und das vollständige Aufschmelzen etwaiger Kristallite erschwert. Durch ein einfaches Zonenschmelzverfahren ist auch eine Homogenisierung in Richtung der Rotationsachse nicht erreichbar.

Zur Homogenisierung einer Quarzglasmasse in drei senkrecht zueinander verlaufenden Richtungen wird in der EP 673 888 B1 ein mehrstufiges Zonenschmelzverfahren vorgeschlagen, bei durch Zusammenstauchen eines Drillstabes ein kugelförmiger Quarzglaskörper als Zwischenprodukt erzeugt wird, an dem beiderseits Haltestäbe angesetzt werden, die quer zu einer vorherigen Rotationsachse verlaufen und mittels denen der kugelförmiger Quarzglaskörper langgezogen und erneut einem Zonenschmelzverfahren mit anderer Rotationsachse unterzogen wird. Beim Verdrillen rotiert der eine Haltestab beispielsweise mit 70 bis 100 Umdrehungen pro Minute, und der andere Haltestab in entgegengesetzter Richtung mit dem 1-bis 3-fachen dieser Geschwindigkeit. Als Heizquelle werden Knallgas- oder Propangasbrenner oder elektrische Heizelemente eingesetzt.

In der US 2,904,713 A wird ein Homogenisierungsprozess für Quarzglas beschrieben, bei dem ein Quarzglasstab an zwei Haltestäben gehalten und zonenweise erweicht wird. Die erweichte Quarzglasmasse wird alternierend gestaucht und gestreckt, indem die Halterohre voneinander weg oder aufeinander zubewegt werden.

### Technische Aufgabenstellung

Das bekannte mehrstufige Zonenschmelzverfahren ist zeit- und energieaufwändig.

Der Erfindung liegt daher die Aufgabe zugrunde, das Zonenschmelzverfahren zur Homogenisierung von Glas, insbesondere für Glas mit einem hohen SiO₂-Anteil und besonders für Quarzglas so zu modifizieren, dass mit möglichst geringem Energie- und Zeitaufwand zusätzlich zur tangentialen Vermischung eine radiale Durchmischung innerhalb der Scherzone ermöglicht wird.

### Zusammenfassung der Erfindung

Diese Aufgabe wird ausgehend von einem Verfahren der eingangs genannten Gattung erfindungsgemäß einerseits dadurch gelöst, dass an die Scherzone beidseitig Rohling-Zylinderabschnitte anschließen, von denen der erste Zylinderabschnitt eine erste Mittelachse und der zweite Zylinderabschnitt eine zweite Mittelachse haben, wobei die erste Mittelachse und die zweite Mittelachse mindestens zeitweise nicht koaxial zueinander verlaufen.

Das erfindungsgemäße Verfahren dient zur Herstellung von Glas, insbesondere von hochkieselsäurehaltigem Glas, und ganz besonders von reinem oder dotiertem Quarzglas, das mindestens teilweise homogenisiert ist. Der zylinderförmige Rohling wird dabei einer thermisch mechanischen Durchmischungsbehandlung, dem Zonenschmelzverfahren, unterzogen. Hierzu wird der Rohling - in der Regel beidseitig mittels angeschmolzener Haltestäbe verlängert - in eine Rotationseinrichtung -wie etwa in eine Glasdrehbank - eingespannt, die mit mindestens einer Heizquelle zum lokalen Erweichen des Rohlings ausgestattet ist. Durch unterschiedliche Rotationsgeschwindigkeiten und/oder Rotationsrichtungen (Drehsinn) der beiderseitigen Rohling-Halterungen zueinander bildet sich im erweichten Glas eine Scherzone, in der Tordierung und thermisch-mechanische Durchmischung des Glases stattfindet. Durch kontinuierliche Verlagerung der Heizeinrichtung entlang des Rohlings und/oder durch kontinuierliche Verlagerung des Rohlings entlang der Heizeinrichtung wird die Scherzone durch den Rohling hindurchgeschoben. Diese thermisch-mechanische Durchmischungsbehandlung umfasst einen Durchlauf oder mehrere Durchläufe (mehrere Drillhübe), bei denen die Scherzone entlang der Rohling-Längsachse in einer Richtung und/oder reversierend verschoben wird.

Die räumliche Orientierung der Längsachse des Rohlings beim Homogenisieren ist beliebig. Häufig ist der Rohling mit horizontal orientierter Längsachse in der Rotationseinrichtung eingespannt, wobei an die Enden des Rohlings Dummystäbe zur Minimierung der Verlustes an Gutmaterial angeschweißt sein können. Die beiderseitigen Rohling-Aufnahmen, wie beispielsweise die Spindeln einer Glasdrehbank, haben im Stand der Technik dieselbe Rotationsachse und diese verläuft koaxial zur Längsachse des zu homogenisierenden Rohlings. Es bildet sich eine kreisförmige Scherzone, wobei die Mittelachsen der an die Scherzone beidseitig angrenzenden Rohling-Zylinderabschnitte zueinander koaxial und in der gemeinsamen Rotationsachse verlaufen.

Im Unterschied dazu ist vorgesehen, dass die erste Mittelachse und die zweite Mittelachse mindestens zeitweise nicht koaxial zueinander verlaufen. Die sich dadurch bildende Scherzone ist nicht rotationsachssymmetrisch, also auch nicht kreisförmig. Es hat sich gezeigt, dass der Materialtransport innerhalb dieser Scherzone nicht nur rein tangential, sondern auch in radialer Richtung erfolgt.

Diese nicht-koaxiale Orientierung der Mittelachsen der beiden Zylinderabschnitte wird am einfachsten bei einem Rohling mit bereits erweichter Scherzone eingestellt; sie kann während der thermisch-mechanischen Durchmischungsbehandlung permanent aufrecht-erhalten werden, oder sie kann währenddessen zeitlich oder im Ausmaß variiert werden. Der Effekt einer "dreidimensionalen Homogenisierung" gemäß dem Stand der Technik hinsichtlich Schlierenfreiheit, Blasenfreiheit und Brechzahl-Verteilung ist auf diese Weise auch bei einem nur einmaligen Durchmischungsvorgang (Drillhub) zu einem gewissen Grade erreichbar.

Das Zonenschmelzverfahren mit nicht-koaxialen Mittelachsen kann auf verschiedene Weise verwirklicht werden. Die Mittelachsen der beiden Zylinderabschnitte können beispielsweise parallel zueinander versetzt sein, sie können gegeneinander verkippt sein und dabei einen Winkel einschließen oder sie können windschief zueinander verlaufen.

Bei einem ersten Grundkonzept sind die erste Mittelachse und die zweite Mittelachse mindestens zeitweise gegeneinander versetzt. Die erste Mittelachse und die zweite Mittelachse verlaufen dabei im einfachsten Fall parallel aber (in ihrer Verlängerung) mit seitlichem Versatz zueinander.

Der Mittelachsenversatz wird dabei bevorzugt auf einen Wert im Bereich zwischen 0,5% und 15% des Rohling-Durchmessers eingestellt. Bei Rohlingen mit Außendurchmessern von weniger als 50 mm ist ein Mittelachsenversatz im oberen Versatzbereich (2 bis 15%), bei Rohlingen mit Außendurchmessern von 50 mm und mehr ist ein Mittelachsenversatz im unteren Versatzbereich (0,5 bis 7%) am besten geeignet.

Bei einer bevorzugten Ausführungsform dieses Grundkonzepts sind erste Mittelachse und zweite Mittelachse zueinander versetzt, wobei mindestens die erste Mittelachse außerdem versetzt zu einer ersten maschinenseitigen Rotationsachse verläuft, um die sie rotiert wird.

Die erste maschinenseitige Rotationsachse entspricht beispielsweise der Rotationsachse der Rotationseinrichtung für den ersten Zylinderabschnitt. Die erste Mittelachse des Zylinderabschnitts verläuft in der Regel parallel, aber seitlich versetzt zu dieser Rotationsachse, also außerhalb der Rotationsachse der Rotationseinrichtung. Der betreffende Zylinderabschnitt rotiert hierbei nicht unbedingt um seine eigene (erste) Mittelachse, aber um die erste maschinenseitige Rotationsachse, so dass er bei dieser Rotation eine Kreisbahn um diese erste maschinenseitige Rotationsachse beschreibt. Da diese Rotationsachse nicht durch den Schwerpunkt des ersten Zylinderabschnitts verläuft, entsteht eine statische Unwucht, die die Scherzone permanent verformt.

In gleicher Weise kann die Mittelachse des zweiten Zylinderabschnitts ihrerseits versetzt zu einer zweiten maschinenseitigen Rotationsachse verlaufen, die beispielsweise der Rotationsachse der Rotationseinrichtung für den zweiten Zylinderabschnitt entspricht. Vorzugsweise rotiert der zweite Zylinderabschnitt jedoch um seine eigene (zweite) Mittelachse, die koaxial zur zweiten maschinenseitigen Rotationsachse, und besonders bevorzugt auch koaxial zur ersten maschinenseitigen Rotationsachse verläuft.

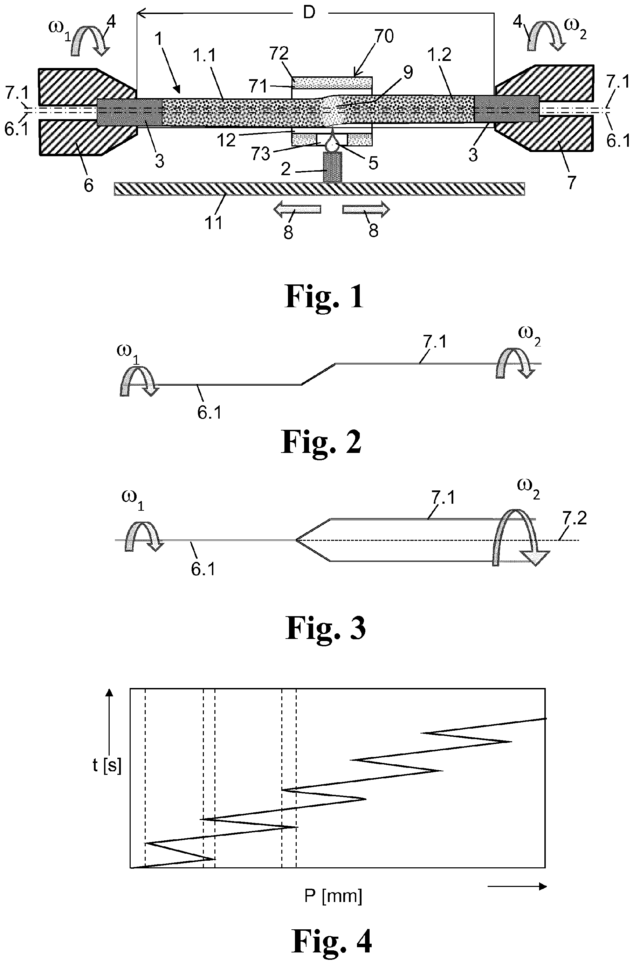

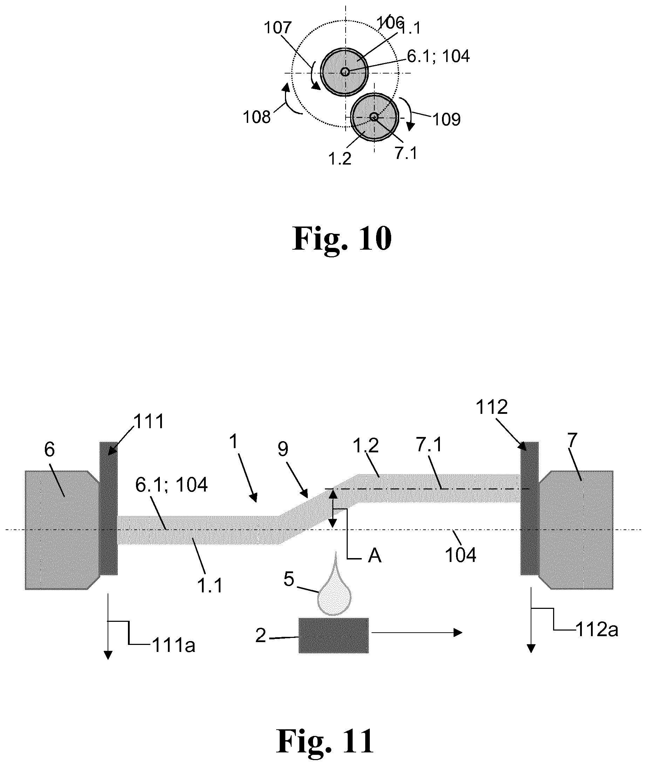

**Figur 10** erläutert dieses Konzept anhand einer Positions- und Rotationsskizze. Dabei sind der erste Zylinderabschnitt 1.1 mit einer ersten Spindel 6 (siehe Figur 1) einer Drehbank und der zweite Zylinderabschnitt 1.2 mit einer zweiten Spindel 7 der Drehbank verbunden. Die beiderseitigen Spindeln, 6; 7definieren eine maschinenseitige Rotationsachse 104. Im Ausführungsbeispiel ist der zweite Zylinderabschnitt 1.2 in Bezug auf die maschinenseitige Rotationsachse exzentrisch an der zweiten Spindel 7 gelagert; das heißt, die Mittelachse 7.1 des zweiten Zylinderabschnitts 1.2 liegt außerhalb der maschinenseitigen Rotationsachse 104 der Drehbank. Der betreffende Zylinderabschnitt 1.2 beschreibt daher eine Kreisbahn 106 um die Rotationsachse 104 mit der Rotationsgeschwindigkeit und der Drehrichtung 108 der zweiten Spindel. Der erste Zylinderabschnitt 1.1 kann exzentrisch oder koaxial zur Rotationsachse 104 angeordnet sein. Im Ausführungsbeispiel von Figur 10 liegen die Mittelachse 6.1 und die maschinenseitige Rotationsachse 104 jedoch übereinander, wobei der erste Zylinderabschnitt 6.1 mittels der ersten Spindel vorzugsweise mit einer zu 108 gegensinnigen Drehrichtung 107 um seine Mittelachse 6.1 rotiert. Der zweite Zylinderabschnitt 1.2 rotiert zusätzlich um seine Mittelachse 7.1 in der durch den Drehrichtungspfeil 109 angezeigten Drehrichtung.

Dies wird konstruktiv beispielsweise durch eine Vorrichtung erreicht, wie sie in **Figur 11** schematisch dargestellt ist. Zur exzentrischen Halterung des zweiten Zylinderabschnitts 1.2 ist dabei ein aus der Spindelkopfmitte verschiebbares Spannfutter 112 zur rotierbaren Halterung des ersten Zylinderabschnitts 1.2 eingesetzt. Gleichermaßen ist auch der erste Zylinderabschnitts 1.2 in einem aus der Spindelkopfmitte verschiebbaren Spannfutter 111 rotierbar um die maschinenseitige Rotationsachse 104 gelagert. Die Veschiebbarkeit der jeweiligen Spannfutter 111, 112 deuten die Richtungspfeile 111a beziehungsweise 112a an. Der Blockpfeil A zeigt den Versatz der Achse 7.1 von den Achsen 6.1 und 104.

In der Scherzone ergibt sich bei diesem Konzept nicht nur eine Tordierung durch unterschiedliche Rotation der Zylinderabschnitte um ihre jeweilige Mittelachse, sondern auch durch das Drehmoment der permanent auf sie einwirkenden Unwucht. Dadurch ergibt sich eine besonders intensive Durchmischung in der Scherzone.

Bei einer anderen Ausführungsform des ersten Grundkonzepts werden der erste Zylinderabschnitt um eine erste Rotationsachse und der zweite Zylinderabschnitt um eine zweite Rotationsachse rotiert, wobei die erste und die zweite Rotationsachse parallel zueinander verlaufen und gegeneinander versetzt sind.

Bei dieser Ausführungsform rotieren beide Zylinderabschnitte um ihre jeweilige Mittelachse, und sie haben keine gemeinsame Rotationsachse. In der Scherzone ergibt sich nicht nur eine Tordierung durch die unterschiedliche Rotation der Zylinderabschnitte, sondern auch durch den seitlichen Versatz der beiden Mittelachsen zueinander.

Bei den oben beschriebenen Verfahrensvarianten des ersten Grundkonzepts verlaufen erste Mittelachse und die zweite Mittelachse seitlich versetzt und parallel zueinander. Die parallele Anordnung der Mittelachsen ist konstruktiv einfach zu realisieren. Ein zweites Grundkonzept der Erfindung zeichnet sich dadurch aus, dass die erste Mittelachse und die zweite Mittelachse mindestens zeitweise während des Homogenisierungsprozesses zueinander verkippt sind oder windschief zueinander verlaufen.

Dadurch ergibt sich eine besonders intensive Durchmischung in der Scherzone. Bei der Verkippung schließen die beiden Mittelachsen einen Verkippungswinkel miteinander ein, der im Verlauf des Zonenschmelzverfahrens verändert werden kann. Bevorzugt wird der Verkippungswinkel jedoch auf den Bereich von 145 bis 175 Grad eingestellt und während des Zonenschmelzverfahrens konstant gehalten. Im Fall einer windschiefen Achsen-Anordnung ergibt sich ein Verkippungswinkel in der Projektion der Achsen-Anordnung auf eine der Ebenen, in denen eine der Mittelachsen verläuft.

Insbesondere für das Homogenisieren schwerer Rohlinge hat sich eine Verkippung als vorteilhaft erwiesen, bei der sich die Zylinderabschnitte von der Scherzone ausgehend schräg nach unten erstrecken.

Dadurch liegt die Scherzone oben und wird von den beiden Zylinderabschnitten nach unten gestützt.

Bei einer anderen, gleichermaßen bevorzugten Verkippungsvariante sind die Zylinderabschnitte so orientiert, dass sie sich von der Scherzone ausgehend schräg nach oben erstrecken.

Dadurch liegt die Scherzone unten, was aufgrund des Eigengewichts der Zylinderabschnitte besonders einfach realisierbar ist.

Bei den Ausführungsformen des ersten Grundkonzepts bewirken der Versatz zwischen den beiderseitigen Zylinderabschnitten beziehungsweise die Verkippung der jeweiligen Mittelachsen zueinander eine Durchmischung des Quarzglases in drei Raumrichtungen. Blasen und andere Inhomogenitäten werden dadurch schraubenförmig um die Rotationsachse langezogen. Im Unterschied zum bekannten Verfahren, bei dem Blasen und andere Inhomogenitäten sich in geschlossenen, koaxialen Ringen um die Rotationsachse verteilen, die schwierig weiter kollabierbar sind, kann die Schraubenform durch Rotation weiter verlängert und ausgedünnt werden kann, bis sie sich auflöst. Das gelingt auch besonders einfach durch einen zweiten Drillhub mit gegensinniger Rotationsrichtung zum ersten Drillhub.

Die oben genannte technische Aufgabe wird andererseits ausgehend von einem Verfahren der eingangs genannten Gattung erfindungsgemäß auch dadurch gelöst, dass das Verschieben der Scherzone entlang der Rohling-Längsachse mindestens zeitweise von einer oszillatorischen Bewegung der Scherzone entlang der Rohling-Längsachse überlagert wird, wobei das erste Rohling-Ende mit einer ersten Rotationsgeschwindigkeit und das zweite Rohling-Ende mit einer zweiten Rotationsgeschwindigkeit rotiert werden, und die oszillatorische Bewegung der Scherzone erzeugt wird, indem die erste und/oder die zweite Rotationsgeschwindigkeit periodisch verändert werden

Unabhängig von der transversalen Verschiebung der Scherzone entlang der Rohling-Längsachse vollzieht die Scherzone eine Hin- und Herbewegung mit kleiner Amplitude. Es hat sich gezeigt, dass auch dadurch eine nicht rotationsachssymmetrische Scherzone erhalten wird, innerhalb der der Materialtransport nicht nur rein tangential, sondern auch in radialer und sogar in axialer Richtung erfolgt.

Die oszillatorische Bewegung der Scherzone wird bei einem Rohling mit bereits erweichter Scherzone erzeugt und sie kann während des Homogenisierungsprozesses permanent aufrecht erhalten werden oder sie kann zeitlich oder im Ausmaß variiert werden. Auch mittels dieser Maßnahme ist der Effekt einer "dreidimensionalen Homogenisierung" hinsichtlich Schlierenfreiheit, Blasenfreiheit und Brechzahl-Verteilung auch bei einem nur einmaligen Durchmischungsvorgang (Drillhub) zu einem gewissen Grade erreichbar.

Die oszillatorische Bewegung der Scherzone wird dadurch erzeugt, dass das erste Rohling-Ende mit einer ersten Rotationsgeschwindigkeit und das zweite Rohling-Ende mit einer zweiten Rotationsgeschwindigkeit rotiert werden, wobei die erste und/oder die zweite Rotationsgeschwindigkeit periodisch verändert werden.

Die Änderungen von erster und zweiter Rotationsgeschwindigkeit sind dabei vorzugsweise derart, dass sich sowohl die Höhe mindestens einer der Rotationsgeschwindigkeiten als auch die Geschwindigkeitsdifferenz zwischen erster und zweiter Rotationsgeschwindigkeit periodisch verändern.

Die oben genannte technische Aufgabe wird andererseits ausgehend von einem Verfahren der eingangs genannten Gattung erfindungsgemäß auch dadurch gelöst, dass das Verschieben der Scherzone entlang der Rohling-Längsachse mindestens zeitweise von einer oszillatorischen Bewegung der Scherzone entlang der Rohling-Längsachse überlagert wird, wobei das Verschieben der Scherzone entlang der Rohling-Längsachse durch lineare axiale Translationsbewegung einer Heizquelle entlang der Rohling-Längsachse bewirkt wird, und die oszillatorische Bewegung der Scherzone erzeugt wird, indem der Translationsbewegung eine reversierende Bewegung der Heizquelle überlagert wird.

Die Heizquelle führt eine Art Pendelbewegung aus, wobei sich der Bewegungsablauf zusammensetzt aus vergleichsweise langen Wegstrecken der Vorwärtsbewegung der Scherzone mit einer Vorschubgeschwindigkeit und regelmäßig oder unregelmäßig eingestreuten vergleichsweise kurzen Wegstrecken der Rückwärtsbewegung mit derselben oder mit einer anderen Vorschubgeschwindigkeit.

Bei allen oben beschriebenen Ausführungsformen des erfindungsgemäßen Verfahrens wird eine nicht-rotationssymmetrische Scherzone erzeugt, die nicht nur eine Durchmischung in tangentialer Richtung, sondern auch in radialer und teilweise auch in axialer Richtung der Rohling-Längsachse ermöglichen. Dadurch ergibt sich außerdem eine gleichmäßigere radiale Temperaturverteilung in der Scherzone, so dass Blasen an die Oberfläche befördert werden und der Blasengehalt im Glasvolumen insgesamt reduziert wird. Auch etwaige im Ausgangsmaterial des Rohlings vorhandene Kristallite schmelzen vollständig auf und werden auf diese Weise beseitigt. Im Fall von dotiertem Quarzglas wird außerdem eine homogenere Dotierstoffverteilung erreicht und Brechzahlschwankungen beseitigt.

Die gleichmäßigere radiale Temperaturverteilung in der Scherzone fördert außerdem die Ausbildung einer schmalen Scherzone. Eine schmale Scherzone bewirkt eine intensivere Durchmischung des Glasvolumens als eine vergleichsweise breitere Scherzone. Die optimale Breite der Scherzone hängt vom Durchmesser des Rohlings ab. Als Faustregel gilt, dass bei einem Rohling mit dem Durchmesser D die Scherzone eine Breite hat, die weniger als 0,3 x D beträgt.

Beim Zonenschmelzverfahren sind die Rotationsgeschwindigkeiten ω₁ und ω₂ beiderseits der "Scherzone" ungleich. Der Unterschiedsbetrag der beiderseitigen Rotationsgeschwindigkeiten ergibt sich aus Δω = |ω₂-ω₁|; bei gegensinniger Rotation hat eine der Rotationsgeschwindigkeiten negatives Vorzeichen. Innerhalb der Scherzone erfolgt ein Übergang von der einen Rotationsgeschwindigkeit ω₁ auf die andere ω₂. In der Mitte der Scherzone stellt sich eine Rotationsgeschwindigkeit ein, die dem Mittelwert v̅ zwischen den beiderseitigen Rotationsgeschwindigkeiten entspricht (v̅ = (ω₂₊ω₁)/2). Als "Scherzone" wird hier dasjenige Glasvolumen definiert, in dem für die axiale Änderung der Rotationsgeschwindigkeit dω/dx gilt: /dω/dx/ > 0,5 x |dω/dx|ₘₐₓ . Als ''Breite der Scherzone" wird der Längenabschnitt in Richtung der Rohling-Längsachse definiert, in dem die obige Bedingung erfüllt ist.

Die Bestimmung der Rotationsgeschwindigkeiten erfolgt durch Messung der Oberflächengeschwindigkeit durch optische Bildverarbeitung und Auswertung der Bewegung oberflächennaher Unregelmäßigkeiten, wie beispielsweise von Bläschen.

In einer zu breiten Scherzone ist sowohl der lokale Geschwindigkeitsgradient als auch der lokale Viskositätsgradient so gering, dass Blasen, Kristalle und andere Glasfehler je nach Ihrer thermischen Stabilität als Ganzes erhalten bleiben können. Zur optimalen Auflösung ist es vorteilhaft, dass der eine Teil des Glasfehlers noch im kälteren, höher viskosen Teil gehalten wird, während er von niedriger viskoser, heißerer Schmelze auf der anderen Seite überströmt und dort aufgelöst/verteilt wird. Ist der Viskositätsgradient zu gering, wird er lediglich "gedreht" und irgendwann einfach mitgerissen.

Bei einer besonders bevorzugten Verfahrensweise der Erfindung sind die oben erläuterten Homogenisierungsmaßnahmen, die eine nicht koaxiale Anordnung der Rotationsachsen der Zylinderabschnitte beiderseits der Scherzone beinhalten, kombiniert mit den ebenfalls oben erläuterten Homogenisierungsmaßnahmen, die eine oszillatorische Bewegung der Scherzone betreffen.

Es hat sich auch eine Verfahrensweise als günstig erwiesen, bei der ein die Scherzone mindestens teilweise umgebender Wärmestrahlungsdissipator eingesetzt wird, dessen seitliche Abmessung in Richtung der Rohling-Längsachse größer als die Scherzone und kleiner als die Rohling-Länge ist, wobei der Wärmestrahlungsdissipator gleichlaufend mit der Scherzone entlang der Rohling-Längsachse bewegt wird.

Der Wärmestrahlungsdissipator absorbiert mindestens einen Teil der Wärmeenergie aus dem Bereich der Scherzone durch Wärmestrahlung, Wärmeleitung oder Wärmekonvektion, erwärmt sich dadurch selbst und gibt diese Energie mindestens teilweise als längerwelligere Infrarotstrahlung wieder an den Rohling und insbesondere an die Scherzone ab. Dadurch, dass seine seitliche Abmessung größer ist als die der Scherzone, wird Wärmeenergie aber auch auf das der Scherzone benachbarte Glas übertragen. Durch die Erwärmung der an die Scherzone angrenzenden, also der Scherzone vorlaufenden und nachlaufenden Glas-Volumenbereiche wird der radiale Temperaturgradient verringert. Denn durch diese Vorab-Erwärmung benötigt das als nächstes in die Scherzone gelangende Glasvolumen einen geringeren zusätzlichen Wärmeeintrag seitens der Heizquelle um eine hinreichende Temperatur zu erreichen.

Das hat zur Folge, dass die maximale Temperatur im peripheren Bereich des Rohlings und damit auch die Temperaturdifferenz zwischen Rohlingmitte und - peripherie kleiner ist als bei einem Umformprozess ohne Wärmestrahlungsdissipator.

Der Wärmestrahlungsdissipator verringert somit die Temperaturgradienten und trägt zur Vergleichmäßigung des Temperaturverlaufs innerhalb der Scherzone bei. Dadurch die Gefahr einer Rissbildung durch mechanische Spannungen verringert.

Im Hinblick auf eine möglichst vollständige Erfassung, Umwandlung und Nutzung der von der Scherzone abgestrahlten Wärmestrahlung hat sich eine um den Zylindermantel umlaufende Ausführung des Wärmestrahlungsdissipators, vorzugsweise in Form eines Rohres bewährt. Das Rohr ist gegebenenfalls beidseitig vollständig oder teilweise offen und es hat eine geschlossene oder weitgehend geschlossene Rohrwand. Verluste an Wärmeenergie durch Strahlung oder Konvektion werden so verringert. Die Innenbohrung des Rohres ist im einfachsten Fall zylinderförmig mit rundem, ovalem oder polygonalem Querschnitt. Sie kann koaxial zur Rohling-Längsachse verlaufen und beispielsweise konisch sein oder sie kann in axialer Richtung eine Heterogenität haben, wie etwa eine Querschnittsveränderung. In der Rohrwandung können Öffnungen vorhanden sein, durch die ein Teil der Wärme abgeführt werden kann oder durch die eine aktive Kühlung möglich ist, um den Wärmeeintrag im Hinblick auf eine möglichst schmale Scherzone einstellen zu können. Die Rohrwandung ist einstückig oder sie ist aus mehreren aneinandergefügten Rohrstücken oder aus mehreren anderen Bauelementen zusammengesetzt. Die Heizquelle befindet sich dabei entweder innerhalb der Rohröffnung oder sie wirkt von außen auf die Scherzone ein, beispielsweise durch eine oder auch mehrere Öffnungen der Rohrwand oder durch einen Längsschlitz. Ein Längsschlitz in einer ansonsten umlaufenden Rohrwand hat auch den Vorteil, dass mechanische Spannungen infolge der hohen Temperaturen und der thermischen Ausdehnung vermieden werden, was etwaige Nachteile durch den Längsschlitz hinsichtlich der Wirkung auf die Temperatur-Homogenisierung in der und um die Scherzone kompensiert.

Es wird ein Wärmestrahlungsdissipator eingesetzt, dessen Abmessung in Richtung der Rohling-Längsachse kleiner ist als die Rohling-Länge, wobei dieser gleichlaufend mit der Scherzone entlang der Rohling-Längsachse bewegt wird. Dadurch, dass sich der Wärmestrahlungsdissipator mit der Scherzone entlang der Rohling-Längsachse mitbewegt, ist gewährleistet, dass sich die Temperaturbedingungen in der Scherzone und den daran angrenzenden Glas-Volumenbereichen während des Umformprozesses nicht ändern.

Ein im Vergleich zur Rohling-Länge kurzer Wärmestrahlungsdissipator gewährleistet außerdem, dass die Temperatur an seiner Innenseite hoch ist, so dass Sublimations-Ablagerungen verglast werden und nicht auf den Rohling herabfallen können.

Zwischen dem Wärmestrahlungsdissipator und dem Rohling wird vorzugsweise ein freier Abstand im Bereich von 15 % bis 80 % des Rohling-Durchmessers eingestellt. Der Abstand wirkt sich auf die Temperatur an der Oberfläche des Rohlings und auf die Temperaturverteilung aus. Bei einem vergleichsweise großen Abstand ist die auf der Rohling-Oberfläche auftreffende Strahlungsintensität geringer, der bestrahlte Oberflächenbereich aber wegen des breiteren Abstrahlwinkels größer. Bei einem freien Abstand von mehr als 80% des Rohling-Durchmessers ergibt sich eine vergleichsweise große bestrahlte Fläche, was einer schmalen Scherzone entgegenwirkt. Bei einem vergleichsweise kleinen freien Abstand von weniger als 15% des Rohling-Durchmessers kann sich durch eingeschlossene Gase ein Druck aufbauen, der den Zutritt einer Brenner- oder Plasmaflamme erschwert.

Es hat sich als besonders günstig erwiesen, wenn ein Wärmestrahlungsdissipator eingesetzt wird, der eine Wandung mit einer der Scherzone zugewandten partiell reflektierenden Innenoberfläche hat, die von einer mindestens 0,1 mm dicken Glasschicht aus einem für Infrarotstrahlung aus dem NIR-Wellenlängenbereich transparenten Quarzglas gebildet wird. Diese Glasschicht hat vorzugsweise keine offenen Poren, in denen sich Fremdmaterialien festsetzen könnten, so dass beim Drillprozess ein Eintrag von Verunreinigung in den Rohling vermieden wird. Die Ausbildung der Transparentschicht aus Quarzglas gewährleistet, dass die Reflektivität der Innenoberfläche und damit deren Einfluss auf das Temperaturprofil im Bereich der Scherzone sich im Lauf der Zeit durch abgedampftes SiO₂ nicht verändert, wenn sich dieses auf der Innenoberfläche als SiO₂-Schicht niederschlägt (im Folgenden auch als ''SiO₂-Deposit" bezeichnet) und das infolge der hohen Temperaturen beim Drillprozess verglast. Für beide Wirkungen (Reinheit und Reflektivität) genügt eine kleine Schichtdicke von beispielsweise 0,1 mm oder mehr.

Die Glasschicht ist für Infrarotstrahlung aus dem NIR-Wellenlängenbereich transparent, jedoch wird ein Teil davon wegen der Brechungsindex-Differenz von Gas-Atmosphäre und Glas an der an der Innenoberfläche reflektiert. Der reflektierte Anteil der auftreffenden Gesamtstrahlungsintensität liegt in der Regel um etwa 4%. Der nicht reflektierte Teil der Infrarotstrahlung breitet sich in der Transparentschicht weiter aus und wird zu einem kleinen Teil gestreut oder absorbiert. Vorzugsweise trifft der dabei transmittierte Strahlungsanteil auf Schicht aus opakem Quarzglas, die Infrarotstrahlung diffus streut und absorbiert. Die Opazität der Schicht aus opakem Quarzglas verhindert die direkte Transmission der Infrarotstrahlung zu Gunsten von Streuung und Absorption. An der Schicht aus opakem Quarzglas wird wiederum ein Teil der Infrarotstrahlung reflektiert. Die zweifache Reflexion an der Schichtenfolge aus Transparentschicht und Schicht aus opakem Quarzglas bewirkt, dass der nicht reflektierte Strahlungsanteil erst innerhalb der Infrarotstrahlung absorbierenden Schicht aus opakem Quarzglas absorbiert wird und dort Wärme erzeugt, wohingegen die heiße Gas-Atmosphäre um die Scherzone nur auf die dem Rohling zugewandte Innenseite durch Wärmeleitung einwirkt. Der Wärmeeintrag in den Wärmestrahlungsdissipator durch Strahlung findet daher im Wesentlichen in der Schicht aus opakem Quarzglas und damit an einer anderen Stelle statt als der Wärmeeintrag durch Wärmeleitung. Dadurch bleibt einerseits die Innenseite heiß genug, um SiO₂-Deposits auf der Innenseite zu binden und zu verglasen, so dass sie nicht herabfallen, und andererseits wird eine Überhitzung der Innenseite vermieden. Die Opazität der Schicht aus opakem Quarzglas wird vorzugsweise durch eine Porosität des Quarzglases im Bereich von 2 bis 8% bewirkt.

Der Wärmestrahlungsdissipator besteht vorzugsweise vollständig aus Quarzglas und besonders bevorzugt aus Quarzglas, das mittels Pyrolyse oder Hydrolyse aus siliziumhaltigen Ausgangssubstanzen synthetisch erzeugt worden ist.

### Definitionen und Messmethoden

Einzelne Verfahrensschritte und Begriffe der obigen Beschreibung sowie Messmethoden werden im Folgenden ergänzend definiert. Die Definitionen sind Bestandteil der Beschreibung der Erfindung. Bei einem inhaltlichen Widerspruch zwischen einer der folgenden Definitionen und der übrigen Beschreibung ist das in der Beschreibung Gesagte maßgeblich.

### Quarzglas

Unter Quarzglas wird hier Glas mit einem SiO₂-Anteil von mindestens 87 Gew-% verstanden. Es ist undotiert (SiO₂-Gehalt = 100%) oder es enthält Dotierstoffe, wie beispielsweise Fluor, Chlor oder Oxide von Seltenerdmetallen, Aluminium oder Titan. Unter einem hochkieselsäurehaltigen Glas wird ein Glas mit einem SiO₂-Anteil von mindestens 80 Gew-% verstanden.

### Porosität - Messung des Porenvolumens

Das "Porenvolumen" eines porösen Materials bezeichnet das von Hohlräumen belegte, freie Volumen innerhalb des Materials. Das Porenvolumen wird beispielsweise mittels eines Porosimeters gemessen, wobei eine nicht benetzende Flüssigkeit (wie beispielsweise Quecksilber) unter Einwirkung eines äußeren Drucks in die Poren eines porösen Materials gegen die entgegenwirkenden Oberflächenspannungskräfte gepresst wird. Die dazu benötigte Kraft ist umgekehrt proportional zur Porengröße und daher kann neben dem Porengesamtvolumen auch die Porengrößenverteilung der Probe ermittelt werden. Die Quecksilberporosimetrie erfasst nur Porengrößen oberhalb von 2 nm (Mesoporen und Makroporen). "Mikroporen" sind Poren mit Porengrößen von weniger als 2 nm. Deren Beitrag zur Porosität und zur spezifischen Oberfläche wird anhand der mittels der V-t-Methode mittels Stickstoffabsorption ermittelt, wobei eine Probe bei unterschiedlichen Drücken und 77 K gehalten wird. Die Methode gleicht der der BET-Methode, wobei der Druckbereich zu höheren Drücken ausgedehnt ist, so dass auch Oberflächen des nicht mikroporösen Teils des Materials erfasst werden.

### Transparenz im NIR-Wellenlängenbereich

Für den Wellenlängenbereich des "Nahem Infrarot" (abgekürzt: NIR) gibt es unterschiedliche Nomenklaturen. Im Rahmen dieser Anmeldung wird darunter in Übereinstimmung mit DIN 5031 Teil 7 (Januar 1984) der Spektralbereich zwischen 780 nm und 3000 nm definiert.

Als transparent im NIR-Wellenlängenbereich wird hier ein Glas bezeichnet, das bei einer Probendicke von 10 mm mindestens 50 % der auftreffenden NIR-Strahlungsleistung transmittiert.

### Messung der Konzentration an Hydroxylgruppen (OH-Gruppen)

Die Messung erfolgt anhand der Methode von D.M. Dodd and D.B. Fräser, "Optical determination of OH in fused silica", Journal of Applied Physics, Vol. 37(1966), p. 3911.

### Ausführungsbeispiel

Nachfolgend wird die Erfindung anhand eines Ausführungsbeispiels und einer Zeichnung näher beschrieben. Im Einzelnen zeigt in schematischer Darstellung
- **Figur 1**: eine Vorrichtung zur Durchführung des Zonenschmelzverfahrens mit zueinander versetzten Rotationsachsen gemäß der Erfindung,
- **Figur 2**: eine Rotationsfigur für einen Rohling, die sich bei einer ersten Verfahrensweise einstellt,
- **Figur 3**: eine Rotationsfigur für einen Rohling, die sich bei einer zweiten Verfahrensweise einstellt,
- **Figur 4**: ein Weg-Zeitdiagramm für die Translationsgeschwindigkeit einer Heizquelle entlang der Rohling-Längsachse bei einer dritten Verfahrensweise gemäß der Erfindung,
- **Figur 5**: eine Variante des Zonenschmelzverfahrens mit zueinander verkippten Rotationsachsen gemäß der Erfindung,
- **Figur 6**: Maßnahmen zur Konstanthaltung des Verkippungswinkels im Verlauf eines Drillhubs bei der Verfahrensweise von Figur 5,
- **Figur 7**: eine vergrößerte Darstellung eines rohrförmigen Wärmestrahlungsdissipators in einer Ansicht auf seine Stirnseite,
- **Figur 8**: ein Diagramm zur Erläuterung der Wirkung einer Ausführungsform der thermisch-mechanischen Durchmischungsbehandlung auf das radiale OH-Gruppen-Konzentrationsprofil im behandelten Rohling,
- **Figur 9**: ein Diagramm zur Erläuterung der Wirkung einer weiteren Ausführungsform der thermisch-mechanischen Durchmischungsbehandlung auf das radiale OH-Gruppen-Konzentrationsprofil im behandelten Rohling,
- **Figur 10**: eine Skizze zur Erläuterung einer Ausführungsform der thermischmechanischen Durchmischungsbehandlung, und
- **Figur 11**: eine zur Durchführung der thermisch-mechanischen Durchmischungsbehandlung geeignete Einrichtung in schematischer Darstellung.

### Bereitstellen eines zylinderförmigen Rohlings aus Quarzglas

### Beispiel 1: Herstellung mittels Gasdrucksintern

Ein zylinderförmiger Pressling aus SiO₂-Granulat wird in einem Gasdrucksinterprozess zu einem Bauteil aus dem dotierten, transparenten Quarzglas erschmolzen. Der Gasdrucksinterprozess wird in einem Gasdrucksinterofen mit einer evakuierbaren Sinterform aus Grafit mit zylinderförmigem Innenraum durchgeführt. Die Form wird zunächst unter Aufrechterhaltung eines Unterdrucks auf die Sintertemperatur von 1700 °C aufgeheizt. Nach Erreichen der Sintertemperatur wird im Ofen ein Überdruck von 15 bar eingestellt und die Form bei dieser Temperatur ca. 30 min lang gehalten. Beim anschließenden Abkühlen auf Raumtemperatur wird der Überdruck bis zu einer Temperatur von 400 °C noch weiter aufrechterhalten. Der erhaltene Quarzglasstab hat einen Durchmesser von 16 mm und eine Länge von 100 mm.

### Beispiel 2: Herstellung mittels Gasphasenabscheidung

Durch Außenabscheidung auf einem Trägerkörper anhand des bekannten OVD-Verfahrens wird ein Sootkörper aus Quarzglas erzeugt und dieser anschließend in einem Vakuumofen verglast. Aus dem verglasten OVD-Zylinder wird ein 1/6-Längssegment geschnitten und dieses auf einer Glasdrillbank gerundet. Es wird ein Quarzglas-Rohling mit einem Durchmesser von 80 mm erhalten, der eine starke Brechzahlvariation über den Durchmesser zeigt, der im Wesentlichen durch die inhomogene Verteilung des OH-Gehalts verursacht ist.

### Zonenschmelzverfahren

### Verfahrensbeispiel (a)

Der Rohling gemäß Beispiel 1 wird anschließend einem Zonenschmelzverfahren (Drillen) unterzogen. Dieser Bearbeitungsvorgang ist in **Figur 1** schematisch gezeigt. Hierzu werden an die stirnseitigen Enden des stabförmigen Rohlings 1 zwei Haltestäbe 3 mittels Plasmabrenner angeschweißt. Die Haltestäbe 3 werden in den Spindeln 6, 7 einer Glasdrehbank eingespannt. Die Spindeln 6; 7 definieren einen Arbeitsabstand "D" der Glasdrehbank.

Die Glasdrehbank ist mit einem Sauerstoff-Wasserstoff-Heizbrenner 2 ausgestattet, der eine Knallgasflamme 5 erzeugt.

Der Heizbrenner 2 ist auf einem verfahrbaren Schlitten 11 montiert und wird auf diesem mittels eines Antriebs entlang des in der Glasdrehbank eingespannten Rohlings 1 bewegt (in der Figur durch die Richtungspfeile 8 angedeutet), wobei der Rohling 1 lokal auf über 2.000 °C erhitzt wird. Die Auftrefffläche der Knallgasflamme auf der Rohling-Oberfläche hat eine Breite von etwa 20 mm.

Durch ungleiche Rotationsgeschwindigkeiten (ω1= 80 U/min , ω2= (-170) U/min) und gegensinnige Rotationsrichtung der beiden Glasdrehbank-Spindeln 6, 7 entsteht im Heizbereich der Knallgasflamme 5 eine Scherzone 9. In der Scherzone 9 findet eine Durchmischung und somit eine Homogenisierung des Glases statt. Ihre Breite B ist kleiner als die Auftrefffläche der Knallgasflamme 5 und beträgt etwa 5 mm . Die Scherzone 9 wird durch reversierende Bewegung des Sauerstoff-Wasserstoffbrenners 2 entlang der Rohling-Längsachse bewegt, und dabei der stabförmige Rohling 1 über seine gesamte Länge intensiv durchmischt. Bei ihrer Bewegung entlang der Rohling-Längsachse ist die Scherzone 9 auf der einen Seite von einem rechten Zylinderabschnitt 1.2 und auf ihrer anderen Seite von einem linken Zylinderabschnitt 1.1 begrenzt.

Sobald die weiche Scherzone 9 gebildet ist, werden die beiden Spindeln 6, 7 der Glasdrehbank radial zueinander um etwa 2 mm versetzt, so dass die beiden Spindel-Rotationsachsen 6.1 beziehungsweise 7.1 zwar parallel aber nicht koaxial zueinander verlaufen. Aufgrund dieses radialen Versatzes ergibt sich eine Verformung der Scherzone 9 in Richtung einer nicht-kreisförmigen, nichtrotationssymmetrischen Ausformung und einer geringeren Breite. Dadurch wird die Homogenisierungseffizienz des Zonenschmelzverfahrens erhöht.

Der auf diese Weise erhaltene homogenisierte Glas-Zylinder hat einen Durchmesser von etwa 15,5 mm und einer Länge von etwa 100 mm.

**Figur 2** zeigt schematisch die entsprechende Rotationsfigur in einer Seitenansicht auf die Mittelachsen 6.1 und 7.1: der erste Zylinderabschnitt 1.1 und der zweite Zylinderabschnitt 1.2 werden dabei um jeweils eigene Rotationsachsen rotiert, die parallel zueinander verlaufen und die durch den Spindelversatz gegeneinander in der Höhenposition um die besagten 2 mm versetzt sind. Die Rotationsachsen entsprechen den Mittelachsen 6.1 (für den Zylinderabschnitt 1.1) und 7.1 (für den Zylinderabschnitt 1.2). Die beiden Zylinderabschnitte 1.1 und 1.2 haben somit keine gemeinsame Rotationsachse. In der Scherzone 9 ergibt sich nicht nur eine Tordierung durch die unterschiedliche Rotation der Zylinderabschnitte 1.1; 1.2, sondern auch durch den seitlichen Versatz der beiden Mittelachsen 6.1 und 7.1 zueinander.

### Verfahrensbeispiel (b)

Zur Homogenisierung der OH-Verteilung wird der Rohling gemäß Beispiel 2 ebenfalls einem Zonenschmelzverfahren unterzogen. Der Bearbeitungsvorgang erfolgt mittels der in Figur 1 schematisch gezeigten Vorrichtung bei zusätzlichem Einsatz eines rohrförmigen Wärmestrahlungsdissipators, der die Scherzone 9 umgibt. Dieser hat eine Länge (Abmessung in Richtung der Rohling-Längsachse) von 300 mm; einen Innendurchmesser von 120 mm und eine Wanddicke von 27 mm. Er ist ebenfalls auf dem Schlitten 11 montiert und wird synchron zum Heizbrenner 2 und mit Hilfe desselben Antriebs entlang des in der Glasdrehbank eingespannten Rohlings 1 bewegt. Die Wandung des Wärmestrahlungsdissipators 70 hat eine Öffnung 73, durch die hindurch der Heizbrenner 2 beziehungsweise die Knallgasflamme 5 ragen. Zwischen dem Rohling 1 und der Innenwandung des Wärmestrahlungsdissipators 70 verbleibt ein Ringspalt 12 mit einer mittleren Spaltweite von 20 mm.

Durch ungleiche Rotationsgeschwindigkeiten (ω1 = (-40) U/min; ω2 = 120 U/min) und gegensinnige Rotationsrichtung der beiden Glasdrehbank-Spindeln 6, 7 entsteht im Heizbereich der Knallgasflamme 5 eine Scherzone 9. In der Scherzone 9 findet eine Durchmischung und somit eine Homogenisierung des Glases statt. Ihre Breite B ist kleiner als die Auftrefffläche der Knallgasflamme 5 und beträgt etwa 10 mm. Die Scherzone 9 wird durch reversierende Bewegung des Sauerstoff-Wasserstoffbrenners 2 entlang der Rohling-Längsachse bewegt, und dabei der stabförmige Rohling 1 über seine gesamte Länge intensiv durchmischt.

Bei ihrer Bewegung entlang der Rohling-Längsachse ist die Scherzone 9 auf der einen Seite von einem rechten Zylinderabschnitt 1.2 und auf ihrer anderen Seite von einem linken Zylinderabschnitt 1.1 begrenzt. Sobald die weiche Scherzone 9 gebildet ist, werden die beiden Spindeln 6, 7 der Glasdrehbank radial zueinander um etwa 2 mm versetzt, so dass die beiden Spindel-Rotationsachsen 6.1 beziehungsweise 7.1 zwar parallel aber nicht koaxial zueinander verlaufen. Aufgrund dieses radialen Versatzes ergibt sich eine Verformung der Scherzone 9 in Richtung einer nicht-kreisförmigen, nicht-rotationsasymmetrischen Ausformung und einer geringeren Breite. Dadurch wird die Homogenisierungseffizienz des Zonenschmelzverfahrens erhöht.

Auf diese Weise wird ein Glas-Zylinder mit einem Durchmesser von etwa 79 mm erhalten.

### Verfahrensbeispiel (c) - Vergleichsbeispiel

Zur Homogenisierung der OH-Verteilung wird ein gemäß Beispiel 2 hergestellter Rohling 1 ebenfalls einem Zonenschmelzverfahren unterzogen, jedoch ohne einen Versatz zwischen den beiden Spindel-Rotationsachsen 6.1 und 7.1 einzustellen; die Rotationsachsen 6.1 und 7.1 liegen somit aufeinander. Bei dieser Verfahrensweise ohne radialen Versatz verformt sich die Scherzone 9 kreisförmig beziehungsweise rotationssymmetrisch.

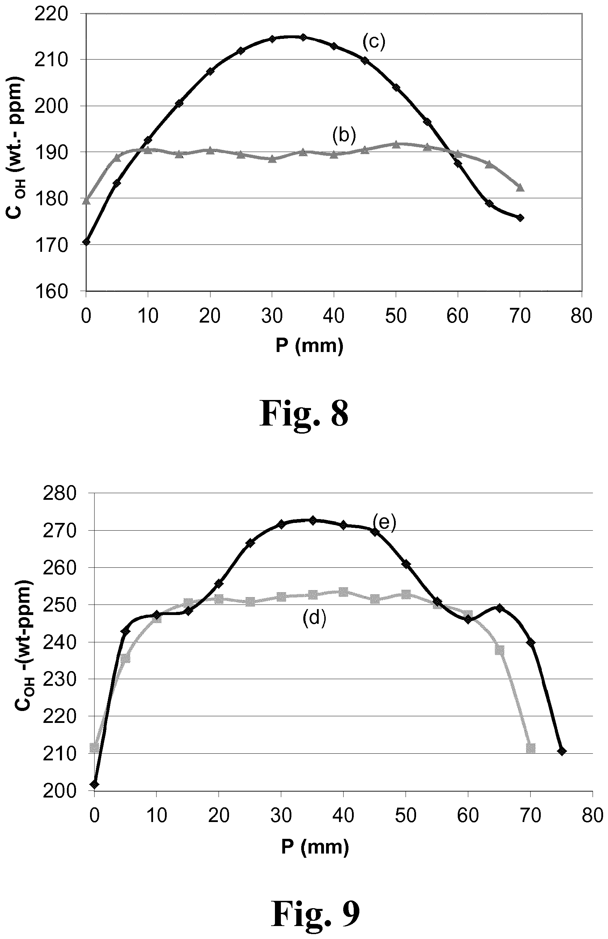

Das Diagramm von **Figur 8** zeigt den Unterschied der radialen Hydroxylgruppenverteilung der Proben von Verfahrensbeispiel (b) und dem Vergleichsbeispiel (c). Auf der y-Achse ist die Hydroxylgruppenkonzentration C_{OH} (in Gew.-ppm) aufgetragen gegen die radiale Position P (in mm), wie sie im homogenisierten Glasstab gemessen worden ist. Kurve (c) zeigt, dass ohne seitlichen Versatz eine parabelförmige OH-Gruppenverteilung im Konzentrationsbereich von 170 bis 215 Gew.ppm erhalten bleibt, wie sie auch im ursprünglichen Drillstab vor der thermisch-mechanischen Durchmischungsbehandlung gemessen wird. Mit dem seitlichen Versatz der Rotationsachsen gemäß Verfahrensbeispiel (b) wird hingegen eine in der Mitte abgeflachte Verteilungskurve (b) mit deutlich geringerer OH-Variation im Konzentrationsbereich zwischen 180 und 190 Gew.-ppm erhalten.

**Figur 3** zeigt schematisch die Rotationsfigur bei einer anderen Verfahrensweise, die durch eine außerzentrische Anordnung des Haltestabes 3 für den rechten Zylinderabschnitt 1.2 in der Spindel 7 erzeugt wird. Die Mittelachse 7.1 des Zylinderabschnitts 1.2 beziehungsweise dessen Haltestabs 3 ist dabei um 3 mm aus der Maschinen-Rotationsachse 7.2 der Spindel 7 versetzt. Der erste Zylinderabschnitt 1.1 rotiert somit um die Mittelachse 6.1 mit der Rotationsgeschwindigkeit ω₁ und der zweite Zylinderabschnitt 1.2 wird mit der Rotationsgeschwindigkeit ω₂ um eine Kreisbahn um die Maschinen-Rotationsachse 7.2 der Spindel 7 gedreht, die koaxial zu Mittelachse 6.1 verläuft. Der zweite Zylinderabschnitt 1.2 rotiert dabei nicht um seine eigene Mittelachse 7.1, sondern er beschreibt eine Kreisbahn um die eigentliche Maschinen-Rotationsachse 7.2 sowie um die koaxial dazu verlaufende Mittelachse 6.1.

In der Scherzone 9 ergibt sich nicht nur eine Tordierung durch unterschiedliche Rotation (ω₁; ω₂=0) der Zylinderabschnitte (1.1; 1.2) um ihre jeweilige Mittelachse (6.1, 7.1), sondern der zur Maschinen-Rotationsachse 7.2 der Spindel 7 versetzte Zylinderabschnitt 1.2 beschreibt gleichzeitig eine Kreisbahn um die gemeinsame Rotationsachse (Mittelachse 6.1). Dadurch ergibt sich eine besonders intensive Durchmischung in der Scherzone 9 nicht nur in tangentialer Richtung, sondern auch in radialer und teilweise auch in axialer Richtung der Rohling-Längsachse.

Bei einer anderen Verfahrensweise zur Ausbildung einer nicht-rotationssymmetrischen, schmalen Scherzone mit guter Durchmischung auch in radialer Richtung vollzieht die Scherzone bei transversaler Verschiebung entlang der Rohling-Längsachse eine Hin- und Herbewegung. **Figur 4** zeigt schematisch ein entsprechendes Zeit-Positions-Diagramm. Auf der y-Achse ist die Zeit t (in s) gegen die örtliche Position P der Heizquelle (in mm) aufgetragen. Der axialen Translationsbewegung einer Heizquelle entlang der Rohling-Längsachse sind zeitlich etwas kürzere Rückwärtsbewegungen überlagert; einige Umkehrpunkte sind durch gestrichelte Linien markiert. Bei der Vorwärts- und Rückwärtsbewegung unterscheiden sich die Wegstrecken etwa um einen Faktor 2, und die Vorschubgeschwindigkeiten sind gleich.

### Verfahrensbeispiel (d)

Bei einer anderen Verfahrensweise zur Homogenisierung der OH-Verteilung wird ein weiterer Rohling, der ein radiales Hydroxylgruppenprofil mit Stufenform aufweist (siehe Figur 9) ebenfalls einem Zonenschmelzverfahren unter Einsatz eines Wärmestrahlungsdissipators 10 (wie anhand Figur 1 beschrieben) unterzogen Dabei wird die oszillatorische Bewegung der Scherzone dadurch erzeugt, dass der erste Zylinderabschnitt mit einer ersten Rotationsgeschwindigkeit ω₁ und der zweite Zylinderabschnitt mit einer zweiten Rotationsgeschwindigkeit ω₂ rotiert werden, wobei die erste und/oder die zweite Rotationsgeschwindigkeit periodisch verändert werden. Tabelle 1 nennt Parameter des bevorzugten Ausführungsbeispiels:

**Tabelle 1**

| **Rotation** | **Verlaufsform** | **Variationsbereich** [U/min] | **Mittelwert** [U/min] | **Amplitude** [U/min] | **Frequenz** [min⁻¹] |
|---|---|---|---|---|---|
| **ω₁** | Sinus | 40 - 160 | 100 | 60 | 1,2 |
| **ω₂** | Sinus | (-160)-(-40) | -100 | 60 | 1,2 |

Die Rotationsgeschwindigkeiten ω₁ und ω₂ ändern sich periodisch gemäß einer Sinusschwingung, wobei die Schwingungsfrequenzen gleich groß sind, so dass sich eine konstante Phasenverschiebung um 200 U/min einstellt. Die Mittelwerte und Amplituden unterscheiden sich jedoch, so dass sich eine periodische Änderung der Rotationsgeschwindigkeiten ergibt, die zu einer oszillatorischen Bewegung der Scherzone führt.

### Verfahrensbeispiel (e) - Vergleichsbeispiel

Zur Homogenisierung der OH-Verteilung wird ein der in Verfahrensbeispiel (d) genannte Quarzglas-Rohling mit stufenförmigem radialem Hydroxylgruppenverteilungsprofil ebenfalls einem Zonenschmelzverfahren unterzogen, jedoch ohne oszillatorische Bewegung der Scherzone wie bei Verfahrensbeispiel (d). Die Rotationsgeschwindigkeiten der Spindel-Rotationsachsen 6.1 und 7.1 sind hierbei auf konstante Werte von - 20 U/min beziehungsweise +180 U/min eingestellt und die Rotationsachsen 6.1 und 7.1 liegen somit aufeinander. Bei dieser Verfahrensweise verformt sich die Scherzone 9 kreisförmig beziehungsweise rotationssymmetrisch.

Das Diagramm von **Figur 9** zeigt den Unterschied der radialen Hydroxylgruppenverteilung der Proben von Verfahrensbeispiel (d) und dem Vergleichsbeispiel (e). Auf der y-Achse ist die Hydroxylgruppenkonzentration C_{OH} (in Gew.-ppm) aufgetragen gegen die radiale Position P (in mm), wie sie im homogenisierten Glasstab gemessen worden ist. Kurve (e) zeigt, dass ohne oszillatorische Bewegung der Scherzone eine OH-Gruppenverteilung mit ausgeprägtem Konzentrationsmaximum im Rohling-Zentrum und bei einem Konzentrationsintervall von 200 bis 270 Gew.- ppm ergibt. Demgegenüber zeigt die Kurve (d), dass sich bei oszillatorischer Bewegung der Scherzone gemäß Verfahrensbeispiel (d) ein in der Mitte abgeflachtes Hydroxylgruppen-Konzentrationsprofil mit deutlich geringerer OH-Variation im Konzentrationsbereich zwischen 210 und 250 Gew.-ppm einstellt.

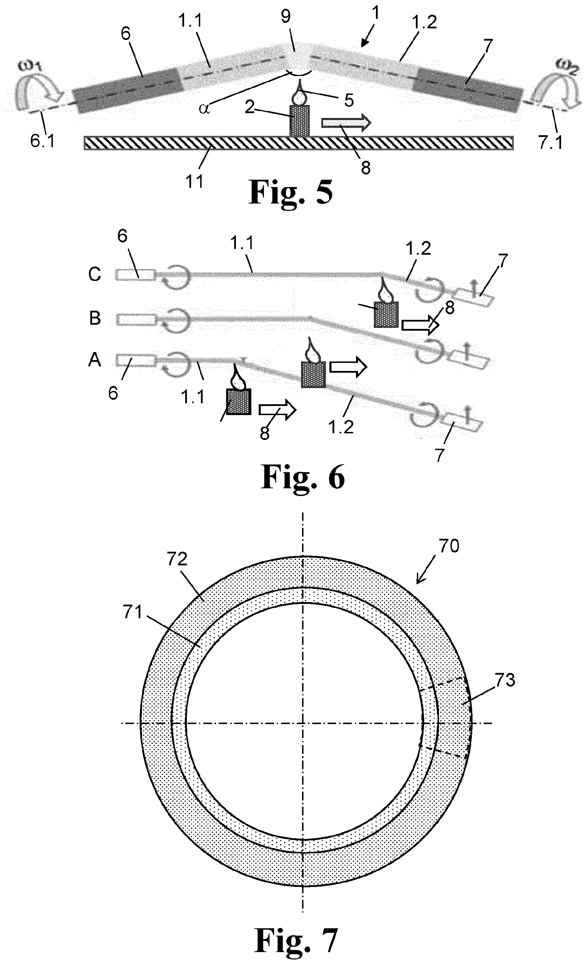

**Figur 5** zeigt schematisch eine weitere Verfahrensweise zur intensiven Durchmischung in der Scherzone. Die gleichen Bezugsziffern wie in Figur 1 bezeichnen gleiche oder äquivalente Bauteile oder Bestandteile wie anhand Figur 1 bereits erläutert. Bei dieser Verfahrensweise sind die beiden Mittelachsen 6.1 und 7.1 verkippt zueinander angeordnet, so dass sie einen Verkippungswinkel α von etwa 165 Grad miteinander einschließen. Die Zylinderabschnitte 1.1 und 1.2 sind dabei so orientiert, dass sich von der Scherzone 9 ausgehend die erste Mittelachse 6.1 und die zweite Mittelachse 7.1 nach unten erstrecken. Bleiben die Höhenpositionen der beiden Glasdrehbank- Spindeln 6, 7 während eines Drillhubs (angedeutet durch den Richtungspfeil 8) konstant, so ändert sich der Verkippungswinkel kontinuierlich. Auch bei dieser Verfahrensvariante kann der anhand Figur 1 erläuterte Wärmestrahlungsdissipator 70 vorteilhaft eingesetzt werden.

Um den Verkippungswinkel α im Verlauf des Zonenschmelzverfahrens konstant zu halten, ist eine Höhenanpassung der Spindeln 6, 7 (beziehungsweise der jeweiligen Spannfutter) erforderlich, wie in **Figur 6** anhand von drei Prozessphasen A, B und C schematisch angedeutet. Ausgehend von der Prozessphase A mit einem vergleichsweise kurzen linken Zylinderabschnitt 1.1 und einem vergleichsweise langen rechten Zylinderabschnitt 1.2 erfordert die kontinuierliche Verlagerung des Heizbrenners 2 und der Scherzone 9 in Richtung der rechten Glasdrehbank-Spindel 7 ein kontinuierliches Anheben der rechten Glasdrehbank-Spindel 7, um den Verkippungswinkel α im Verlauf des Zonenschmelzverfahrens konstant zu halten, wie dies die Richtungspfeile 62 anzeigen. Anstelle der kontinuierlichen Bewegung einer der Spindeln (Spannfutter) könne auch beide (Spindeln) Spannfutter in vertikaler Richtung verfahren werden. Um die Rohling-Länge konstant zu halten, können die Spannfutter aufeinander zu bewegt werden.

**Figur 7** zeigt eine größere Darstellung des Wärmestrahlungsdissipators 70 von Figur 1 in einer Ansicht auf seine Stirnseite. Die Wandung besteht aus zwei koaxialen und aneinandergrenzenden Schichten, nämlich einer Innenschicht 71 aus synthetisch erzeugtem, blasenarmem Quarzglas mit einer Schichtdicke von 1,5 mm und aus einer daran unmittelbar angrenzenden Außenschicht 72 aus synthetisch erzeugtem, opakem Quarzglas mit einer Schichtdicke von 15 mm. Die glasige Innenschicht 71 enthält keine visuell erkennbaren Poren. Sie reflektiert einen Teil der auftreffenden Infrarotstrahlung (etwa 4% der Gesamtstrahlungsintensität) und ist ansonsten für Infrarotstrahlung über einen breiten Wellenlängenbereich transparent. Die Opazität der angrenzenden Außenschicht 72 wird durch eine Porosität von etwa 5% erzeugt. Die auf die Außenschicht 72 auftreffende Infrarotstrahlung wird an der Grenzfläche zur Innenschicht 71 ebenfalls teilweise reflektiert, jedoch überwiegend in der Außenschicht 72 gestreut und absorbiert. Abgesehen von einer Durchlassöffnung 73 für den Heizbrenner 2 ist die Wandung geschlossen. Die Stirnseiten sind offen.

Beim erfindungsgemäßen Zonenschmelzverfahren absorbiert der Wärmestrahlungsdissipator 70 einen Teil der Wärmeenergie aus der Scherzone 9 insbesondere durch Wärmestrahlung und Wärmeleitung, erwärmt sich dadurch selbst und emittiert diese Energie als längerwelligere Infrarotstrahlung. Der Wärmestrahlungsdissipator 70 ist mittig zur Scherzone 9 angeordnet und überragt sie beidseitig, so dass die emittierte Wärmeenergie auch auf das der Scherzone 9 benachbarte Glasvolumen übertragen wird. Im Vergleich zu einem Zonenschmelzverfahren ohne den Wärmestrahlungsdissipator 70 werden durch die Vorab- und Nacherwärmung der axiale Temperaturgradient und die Temperaturdifferenz zwischen Rohlingmitte und -peripherie verringert. Dazu trägt bei, dass die durch die mittige Durchlassöffnung 73 in den Spalt 12 zwischen Wärmestrahlungsdissipator 70 und Rohling 1 eingeleiteten Brennergase beidseitig der Scherzone 9 nach rechts und links entlang der Rohling-Längsachse 10 abfließen und dadurch die Bereiche neben der Scherzone 9 erwärmen.

Durch diese Vergleichmäßigung des Temperaturverlaufs innerhalb der Scherzone 9 wird die Gefahr einer Rissbildung durch mechanische Spannungen verringert.

Die zweifache Reflexion an der Schichtenfolge aus Innenschicht 71 und Außenschicht 72 bewirkt, dass der nicht reflektierte Strahlungsanteil erst innerhalb der Infrarotstrahlung absorbierenden Außenschicht 72 absorbiert wird und dort Wärme erzeugt, wohingegen die heiße Gas-Atmosphäre um die Scherzone 9 nur auf die Rohr-Innenwandung des Wärmestrahlungsdissipators 70 durch Wärmeleitung einwirkt. Der Wärmeeintrag in den Wärmestrahlungsdissipator 70 durch Strahlung findet daher im Wesentlichen in der Außenschicht 72 und damit an einer anderen Stelle statt als der Wärmeeintrag durch Wärmeleitung. Dadurch bleibt einerseits die Innenseite heiß genug, um SiO₂-Deposits auf der Innenseite zu binden und zu verglasen, so dass sie nicht herabfallen, und andererseits wird eine Überhitzung der Innenseite vermieden.

Die folgende Tabelle zeigt Versuchsparameter und Ergebnisse von Zonenschmelzverfahren mit Wärmestrahlungsdissipator (Versuch 1) und ohne Wärmestrahlungsdissipator (Versuch 2).

**Tabelle 2**

| **Versuch** | **ω₁** [U/min] | **ω₂** [U/min] | **Tₘₐₓ** [°C] | **v** [mm/min] | **B** [mm] | **Risse** |
|---|---|---|---|---|---|---|
| 1 | -60 | +140 | 2290 | 10 | 5 | Nein |
| 2 | -60 | +140 | 2140 | 8 | 9 | Ja |

Dabei bedeuten:
- ω₁, ω_{2:}: Rotationsgeschwindigkeiten beiderseits der "Scherzone".
- Tₘₐₓ: Maximale Temperatur im Bereich der Scherzone
- v: Translationsgeschwindigkeit von Heizbrenner und Wärmestrahlungsdissipator
- B: Maximale Breite der Scherzone
- Risse: Auftreten eines Risses nach Abschluss des Zonenschmelzverfahrens.

## Patentansprüche

1. Verfahren zur Homogenisierung von Glas, umfassend die Verfahrensschritte:
(a) Bereitstellen eines zylinderförmigen Rohlings (1) aus dem Glas mit einer Zylindermantelfläche, die sich entlang einer Rohling-Längsachse (6.1; 7.1) über eine Rohling-Länge zwischen einem ersten stirnseitigen Ende und einem zweiten stirnseitigen Ende erstreckt,
(b) Ausbilden einer Scherzone (9) in dem Rohling (1), indem ein Längenabschnitt des Rohlings (1) erweicht und einer thermisch-mechanischen Durchmischungsbehandlung unterzogen wird, und
(c) Verschieben der Scherzone (9) entlang der Rohling-Längsachse (6.1; 7.1),
**dadurch gekennzeichnet, dass** an die Scherzone (9) beidseitig Rohling-Zylinderabschnitte (1.1; 1.2) anschließen, von denen der erste Zylinderabschnitt (1.1) eine erste Mittelachse (6.1) und der zweite Zylinderabschnitt (1.2) eine zweite Mittelachse (7.1) haben, wobei die erste Mittelachse (6.1) und die zweite Mittelachse (7.1) mindestens zeitweise nicht koaxial zueinander verlaufen.

2. Verfahren nach Anspruch 1, **dadurch gekennzeichnet, dass** die erste Mittelachse (6.1) und die zweite Mittelachse (7.1) mindestens zeitweise gegeneinander versetzt sind.

3. Verfahren nach Anspruch 2, **dadurch gekennzeichnet, dass** der Mittelachsenversatz auf einen Wert im Bereich zwischen 0,5% und 15% des Rohling-Durchmessers eingestellt wird.

4. Verfahren nach Anspruch 2 oder 3, **dadurch gekennzeichnet, dass** mindestens die erste Mittelachse (6.1) außerdem versetzt zu einer ersten maschinenseitigen Rotationsachse (7.2; 104) verläuft, um die sie rotiert wird.

5. Verfahren nach Anspruch 2 oder 3, **dadurch gekennzeichnet, dass** der erste Zylinderabschnitt (1.1) um die erste maschinenseitige Rotationsachse (7.2; 104) und der zweite Zylinderabschnitt (1.2) um eine zweite maschinenseitige Rotationsachse rotiert werden, wobei die erste und die zweite Rotationsachse parallel zueinander verlaufen und gegeneinander versetzt sind.

6. Verfahren nach Anspruch 1, **dadurch gekennzeichnet, dass** die erste Mittelachse (6.1) und die zweite Mittelachse (7.1) mindestens zeitweise zueinander verkippt sind oder zeitweise windschief zueinander verlaufen, wobei der erste Zylinderabschnitt (1.1) um die erste Mittelachse (6.1) und der zweite Zylinderabschnitt (1.2) um die zweite Mittelachse (7.1) rotiert werden.

7. Verfahren nach Anspruch 6, **dadurch gekennzeichnet, dass** sich die Zylinderabschnitte (1.1; 1.2) von der Scherzone (9) ausgehend schräg nach unten erstrecken.

8. Verfahren nach Anspruch 6, **dadurch gekennzeichnet, dass** die Zylinderabschnitte (1.1; 1.2) so orientiert sind, dass sie sich von der Scherzone (9) ausgehendschräg nach oben erstrecken.

9. Verfahren zur Homogenisierung von Glas, umfassend die Verfahrensschritte:
(a) Bereitstellen eines zylinderförmigen Rohlings (1) aus dem Glas mit einer Zylindermantelfläche, die sich entlang einer Rohling-Längsachse (6.1; 7.1) über eine Rohling-Länge zwischen einem ersten stirnseitigen Ende und einem zweiten stirnseitigen Ende erstreckt,
(b) Ausbilden einer Scherzone (9) in dem Rohling (1), indem ein Längenabschnitt des Rohlings (1) erweicht und einer thermisch-mechanischen Durchmischungsbehandlung unterzogen wird, und
(c) Verschieben der Scherzone (9) entlang der Rohling-Längsachse (6.1; 7.1),
**dadurch gekennzeichnet, dass** das Verschieben der Scherzone entlang der Rohling-Längsachse mindestens zeitweise von einer oszillatorischen Bewegung der Scherzone entlang der Rohling-Längsachse überlagert wird wobei das erste Rohling-Ende mit einer ersten Rotationsgeschwindigkeit und das zweite Rohling-Ende mit einer zweiten Rotationsgeschwindigkeit rotiert werden, und die oszillatorische Bewegung der Scherzone erzeugt wird, indem die erste und/oder die zweite Rotationsgeschwindigkeit periodisch verändert werden.

10. Verfahren zur Homogenisierung von Glas, umfassend die Verfahrensschritte:
(a) Bereitstellen eines zylinderförmigen Rohlings (1) aus dem Glas mit einer Zylindermantelfläche, die sich entlang einer Rohling-Längsachse (6.1; 7.1) über eine Rohling-Länge zwischen einem ersten stirnseitigen Ende und einem zweiten stirnseitigen Ende erstreckt,
(b) Ausbilden einer Scherzone (9) in dem Rohling (1), indem ein Längenabschnitt des Rohlings (1) erweicht und einer thermisch-mechanischen Durchmischungsbehandlung unterzogen wird, und
(c) Verschieben der Scherzone (9) entlang der Rohling-Längsachse (6.1; 7.1),
**dadurch gekennzeichnet, dass** das Verschieben der Scherzone entlang der Rohling-Längsachse mindestens zeitweise von einer oszillatorischen Bewegung der Scherzone entlang der Rohling-Längsachse überlagert wird, wobei das Verschieben der Scherzone (9) entlang der Rohling-Längsachse (6.1; 7.1) durch lineare axiale Translationsbewegung einer Heizquelle (2) entlang der Rohling-Längsachse (6.1; 7.1) bewirkt wird, und die oszillatorische Bewegung der Scherzone (9) erzeugt wird, indem der Translationsbewegung eine reversierende Bewegung der Heizquelle (2) überlagert wird.

11. Verfahren zur Homogenisierung von Glas, umfassend die Verfahrensschritte:
(a) Bereitstellen eines zylinderförmigen Rohlings (1) aus dem Glas mit einer Zylindermantelfläche, die sich entlang einer Rohling-Längsachse (6.1; 7.1) über eine Rohling-Länge zwischen einem ersten stirnseitigen Ende und einem zweiten stirnseitigen Ende erstreckt,
(b) Ausbilden einer Scherzone (9) in dem Rohling (1), indem ein Längenabschnitt des Rohlings (1) erweicht und einer thermisch-mechanischen Durchmischungsbehandlung unterzogen wird, und
(c) Verschieben der Scherzone (9) entlang der Rohling-Längsachse (6.1; 7.1),
**dadurch gekennzeichnet, dass** es eine Kombination des Verfahrens nach einem der Ansprüche 1 bis 8 und einem Verfahren umfasst, bei dem das Verschieben der Scherzone (9) entlang der Rohling-Längsachse mindestens zeitweise von einer oszillatorischen Bewegung der Scherzone (9) entlang der Rohling-Längsachse (6.1; 7.1) überlagert wird.

12. Verfahren nach einem der vorhergehenden Ansprüche, **dadurch gekennzeichnet, dass** der Rohling (1) einen Durchmesser D hat, und dass die Scherzone (9) eine Breite hat, die weniger als 0,3 x D beträgt.

13. Verfahren nach einem der vorhergehenden Ansprüche, **dadurch gekennzeichnet, dass** die Scherzone (9) mindestens teilweise von einem Wärmestrahlungsdissipator (70) umgeben ist, dessen seitliche Abmessung in Richtung der Rohling-Längsachse (6.1; 7.1) größer als die Scherzone (1) und kleiner als die Rohling-Länge ist, wobei der Wärmestrahlungsdissipator (70) gleichlaufend mit der Scherzone (9) entlang der Rohling-Längsachse (6.1; 7.1) bewegt wird.

## Claims

1. A method for homogenizing glass, comprising the method steps of:
(a) providing a cylindrical blank (1) made of the glass and having a cylindrical outer surface extending along a longitudinal axis (6.1; 7.1) of the blank over a length of the blank between a first end face and a second end face,
(b) forming a shear zone (9) in the blank (1) by softening a longitudinal portion of the blank (1) and subjecting said portion to a thermal-mechanical intermixing treatment, and
(c) displacing the shear zone (9) along the longitudinal axis (6.1; 7.1) of the blank, **characterized in that** cylindrical portions (1.1; 1.2) of the blank are adjacent to the shear zone (9) on both sides, the first cylindrical portion (1.1) having a first central axis (6.1) and the second cylindrical portion (1.2) having a second central axis (7.1), wherein the first central axis (6.1) and the second central axis (7.1) are non-coaxial with each other at least at times.

2. The method according to claim 1, **characterized in that** the first central axis (6.1) and the second central axis (7.1) are offset from each other at least at times.

3. The method according to claim 2, **characterized in that** the central axis offset is set to a value in the range of between 0.5 % and 15 % of the diameter of the blank.

4. The method according to claim 2 or 3, **characterized in that** at least the first central axis (6.1) additionally extends so as to be offset from a first machine-side axis of rotation (7.2; 104) about which it is rotated.

5. The method according to claim 2 or 3, **characterized in that** the first cylindrical portion (1.1) is rotated about the first machine-side axis of rotation (7.2; 104) and the second cylindrical portion (1.2) is rotated about a second machine-side axis of rotation, wherein the first and the second axis of rotation extend parallel to each other and are offset from each other.

6. The method according to claim 1, **characterized in that** the first central axis (6.1) and the second central axis (7.1) are tilted relative to each other at least at times or run skew to each other at times, wherein the first cylindrical portion (1.1) is rotated about the first central axis (6.1) and the second cylindrical portion (1.2) is rotated about the second central axis (7.1).

7. The method according to claim 6, **characterized in that** the cylindrical portions (1.1; 1.2) extend obliquely downwards, starting from the shear zone (9).

8. The method according to claim 6, **characterized in that** the cylindrical portions (1.1; 1.2) are oriented such that they extend obliquely upwards, starting from the shear zone (9).

9. A method for homogenizing glass, comprising the method steps of:
(a) providing a cylindrical blank (1) made of the glass and having a cylindrical outer surface extending along a longitudinal axis (6.1; 7.1) of the blank over a length of the blank between a first end face and a second end face,
(b) forming a shear zone (9) in the blank (1) by softening a longitudinal portion of the blank (1) and subjecting said portion to a thermal-mechanical intermixing treatment, and
(c) displacing the shear zone (9) along the longitudinal axis (6.1; 7.1) of the blank, **characterized in that** the displacement of the shear zone along the longitudinal axis of the blank is superimposed at least at times by an oscillatory movement of the shear zone along the longitudinal axis of the blank,
wherein the first end of the blank is rotated at a first rotational speed and the second end of the blank is rotated at a second rotational speed, and the oscillatory movement of the shear zone is generated by periodically varying the first and/or second rotational speed.

10. A method for homogenizing glass, comprising the method steps of:
(a) providing a cylindrical blank (1) made of the glass and having a cylindrical outer surface extending along a longitudinal axis (6.1; 7.1) of the blank over a length of the blank between a first end face and a second end face,
(b) forming a shear zone (9) in the blank (1) by softening a longitudinal portion of the blank (1) and subjecting said portion to a thermal-mechanical intermixing treatment, and
(c) displacing the shear zone (9) along the longitudinal axis (6.1; 7.1) of the blank, **characterized in that** the displacement of the shear zone along the longitudinal axis of the blank is superimposed at least at times by an oscillatory movement of the shear zone along the longitudinal axis of the blank, wherein the displacement of the shear zone (9) along the longitudinal axis (6.1;7.1) of the blank is caused by linear axial translational movement of a heat source (2) along the longitudinal axis (6.1; 7.1) of the blank, and the oscillatory movement of the shear zone (9) is generated by superimposing a reversing movement of the heat source (2) on the translational movement.

11. A method for homogenizing glass, comprising the method steps of:
(a) providing a cylindrical blank (1) made of the glass and having a cylindrical outer surface extending along a longitudinal axis (6.1; 7.1) of the blank over a length of the blank between a first end face and a second end face,
(b) forming a shear zone (9) in the blank (1) by softening a longitudinal portion of the blank (1) and subjecting said portion to a thermal-mechanical intermixing treatment, and
(c) displacing the shear zone (9) along the longitudinal axis (6.1; 7.1) of the blank. **characterized in that** it comprises a combination of the method according to any one of claims 1 to 8 and a method in which the displacement of the shear zone (9) along the longitudinal axis of the blank is superimposed at least at times by an oscillatory movement of the shear zone (9) along the longitudinal axis (6.1; 7.1) of the blank.

12. The method according to any one of the preceding claims, **characterized in that** the blank (1) has a diameter D, and **in that** the shear zone (9) has a width that is less than 0.3 x D.

13. The method according to any one of the preceding claims, **characterized in that** the shear zone (9) is at least partially surrounded by a thermal radiation dissipator (70), the lateral dimension of which, in the direction of the longitudinal axis (6.1; 7.1) of the blank, is greater than the shear zone (1) and smaller than the length of the blank, wherein the thermal radiation dissipator (70) is moved synchronously with the shear zone (9) along the longitudinal axis (6.1; 7.1) of the blank.

## Revendications

1. Procédé permettant l'homogénéisation de verre, comprenant les étapes de procédé de :
(a) fourniture d'une ébauche (1) en forme de cylindre constituée du verre comportant une surface latérale de cylindre qui s'étend le long d'un axe longitudinal d'ébauche (6.1 ; 7.1) sur une longueur d'ébauche entre une première extrémité côté frontal et une seconde extrémité côté frontal,
(b) formation d'une zone de cisaillement (9) dans l'ébauche (1) en ramollissant une section longitudinale de l'ébauche (1) et en la soumettant à un traitement de mélange thermomécanique et
(c) déplacement de la zone de cisaillement (9) le long de l'axe longitudinal d'ébauche (6.1 ; 7.1),
**caractérisé en ce que** des sections de cylindre d'ébauche (1.1 ; 1.2) se raccordent à la zone de cisaillement (9) des deux côtés, dont la première section de cylindre (1.1) présente un premier axe central (6.1) et la seconde section de cylindre (1.2) présente un second axe central (7.1), le premier axe central (6.1) et le second axe central (7.1) ne s'étendant pas de manière coaxiale l'un par rapport à l'autre au moins temporairement.

2. Procédé selon la revendication 1, **caractérisé en ce que** le premier axe central (6.1) et le second axe central (7.1) sont décalés l'un par rapport à l'autre au moins temporairement.

3. Procédé selon la revendication 2, **caractérisé en ce que** le décalage d'axe central est réglé à une valeur dans la plage entre 0,5 % et 15 % du diamètre d'ébauche.

4. Procédé selon la revendication 2 ou 3, **caractérisé en ce qu'**au moins le premier axe central (6.1) s'étend en outre de manière décalée par rapport à un premier axe de rotation côté machine (7.2 ; 104) autour duquel il est entraîné en rotation.

5. Procédé selon la revendication 2 ou 3, **caractérisé en ce que** la première section de cylindre (1.1) est entraînée en rotation autour du premier axe de rotation côté machine (7.2 ; 104) et la seconde section de cylindre (1.2) est entraînée en rotation autour d'un second axe de rotation côté machine, le premier et le second axe de rotation s'étendant parallèlement l'un par rapport à l'autre et étant décalés l'un par rapport à l'autre.

6. Procédé selon la revendication 1, **caractérisé en ce que** le premier axe central (6.1) et le second axe central (7.1) sont au moins temporairement inclinés l'un par rapport à l'autre ou s'étendent temporairement de travers l'un par rapport à l'autre, la première section de cylindre (1.1) étant entraînée en rotation autour du premier axe central (6.1) et la seconde section de cylindre (1.2) étant entraînée en rotation autour du second axe central (7.1).

7. Procédé selon la revendication 6, **caractérisé en ce que** les sections de cylindre (1.1 ; 1.2) s'étendent obliquement vers le bas à partir de la zone de cisaillement (9).

8. Procédé selon la revendication 6, **caractérisé en ce que** les sections de cylindre (1.1 ; 1.2) sont orientées de telle manière qu'elles s'étendent obliquement vers le haut à partir de la zone de cisaillement (9).

9. Procédé permettant l'homogénéisation de verre, comprenant les étapes de procédé de :
(a) fourniture d'une ébauche (1) en forme de cylindre constituée du verre comportant une surface latérale de cylindre qui s'étend le long d'un axe longitudinal d'ébauche (6.1 ; 7.1) sur une longueur d'ébauche entre une première extrémité côté frontal et une seconde extrémité côté frontal,
(b) formation d'une zone de cisaillement (9) dans l'ébauche (1) en ramollissant une section longitudinale de l'ébauche (1) et en la soumettant à un traitement de mélange thermomécanique et
(c) déplacement de la zone de cisaillement (9) le long de l'axe longitudinal d'ébauche (6.1 ; 7.1),
**caractérisé en ce que** le déplacement de la zone de cisaillement le long de l'axe longitudinal d'ébauche est superposé au moins temporairement à un mouvement oscillatoire de la zone de cisaillement le long de l'axe longitudinal d'ébauche dans lequel la première extrémité d'ébauche est entraînée en rotation à une première vitesse de rotation et la seconde extrémité d'ébauche est entraînée en rotation à une seconde vitesse de rotation et le mouvement oscillatoire de la zone de cisaillement est généré en modifiant périodiquement la première et/ou la seconde vitesse de rotation.

10. Procédé permettant l'homogénéisation de verre, comprenant les étapes de procédé de :
(a) fourniture d'une ébauche (1) en forme de cylindre constituée du verre comportant une surface latérale de cylindre qui s'étend le long d'un axe longitudinal d'ébauche (6.1 ; 7.1) sur une longueur d'ébauche entre une première extrémité côté frontal et une seconde extrémité côté frontal,
(b) formation d'une zone de cisaillement (9) dans l'ébauche (1) en ramollissant une section longitudinale de l'ébauche (1) et en la soumettant à un traitement de mélange thermomécanique et
(c) déplacement de la zone de cisaillement (9) le long de l'axe longitudinal d'ébauche (6.1 ; 7.1),
**caractérisé en ce que** le déplacement de la zone de cisaillement le long de l'axe longitudinal d'ébauche est superposé au moins temporairement à un mouvement oscillatoire de la zone de cisaillement le long de l'axe longitudinal d'ébauche, le déplacement de la zone de cisaillement (9) le long de l'axe longitudinal d'ébauche (6.1 ; 7.1) étant provoqué par un mouvement de translation axial linéaire d'une source de chaleur (2) le long de l'axe longitudinal d'ébauche (6.1 ; 7.1) et le mouvement oscillatoire de la zone de cisaillement (9) étant généré en superposant un mouvement inverse de la source de chaleur (2) au mouvement de translation.

11. Procédé permettant l'homogénéisation de verre, comprenant les étapes de procédé de :
(a) fourniture d'une ébauche (1) en forme de cylindre constituée du verre comportant une surface latérale de cylindre qui s'étend le long d'un axe longitudinal d'ébauche (6.1 ; 7.1) sur une longueur d'ébauche entre une première extrémité côté frontal et une seconde extrémité côté frontal,
(b) formation d'une zone de cisaillement (9) dans l'ébauche (1) en ramollissant une section longitudinale de l'ébauche (1) et en la soumettant à un traitement de mélange thermomécanique et
(c) déplacement de la zone de cisaillement (9) le long de l'axe longitudinal d'ébauche (6.1 ; 7.1),
**caractérisé en ce qu'**il comprend une combinaison du procédé selon l'une quelconque des revendications 1 à 8 et d'un procédé dans lequel le déplacement de la zone de cisaillement (9) le long de l'axe longitudinal d'ébauche est superposé au moins temporairement à un mouvement oscillatoire de la zone de cisaillement (9) le long de l'axe longitudinal d'ébauche (6.1 ; 7.1).

12. Procédé selon l'une quelconque des revendications précédentes, **caractérisé en ce que** l'ébauche (1) présente un diamètre D, et **en ce que** la zone de cisaillement (9) présente une largeur inférieure à 0,3 x D.

13. Procédé selon l'une quelconque des revendications précédentes, **caractérisé en ce que** la zone de cisaillement (9) est au moins partiellement entourée par un dissipateur de rayonnement thermique (70) dont la dimension latérale en direction de l'axe longitudinal d'ébauche (6.1 ; 7.1) est supérieure à la zone de cisaillement (1) et est inférieure à la longueur d'ébauche, le dissipateur de rayonnement thermique (70) étant déplacé en même temps que la zone de cisaillement (9) le long de l'axe longitudinal d'ébauche (6.1 ; 7.1).
